# EUROPEAN PATENT SPECIFICATION

(11) **EP 1 123 909 B1**
(45) Date of publication and mention of the grant of the patent: **28.04.2004**
(21) Application number: 01102233.2
(22) Date of filing: 31.01.2001
(51) Int. Cl.: C05F 17/02, C05F 9/04

(54) **Composting container**
Kompostierungsbehälter
Récipient à compost

(30) Priority: 10.02.2000 JP 2000033408
(43) Date of publication of application: 16.08.2001
(73) Proprietor: Tanaka Sangyo Co., Ltd., Toyonaka, Osaka (JP)
(72) Inventor: Taniguchi, Mitsunori, Toyonaka, Osaka (JP)
(74) Representative: Hering, Hartmut, Dipl.-Ing.

(56) References cited:
- DE-A- 2 061 859
- DE-U- 9 115 182
- DE-U- 29 905 839
- DE-U- 29 910 824
- PATENT ABSTRACTS OF JAPAN vol. 1998, no. 02, 30 January 1998 (1998-01-30) & JP 09 278573 A (TANAKA SANGYO KK), 28 October 1997 (1997-10-28) & US 5 894 780 A 20 April 1999 (1999-04-20)
- PATENT ABSTRACTS OF JAPAN vol. 017, no. 291 (C-1067), 4 June 1993 (1993-06-04) & JP 05 017276 A (ISAO TANAKA), 26 January 1993 (1993-01-26)

## Description

The present invention relates to a composting container for obtaining a good compost from waste such as rice husks, chaffs, or manure generated from farming or livestock farming. In particular, the present invention relates to a composting container that permits a compost to be easily discharged after sufficiently being decayed and decomposed.

Composting containers have been conventionally in widespread use as a means for composting farming and livestock farming waste such as rice husks, chaffs, or manure. As a composting means for farming and livestock farming waste, Japanese Open Patent Gazette No. 3-75512, assigned to the assignee of the present invention, discloses a large-scale composting container, fabricated of a sewn air-permeable material, having a tubular barrel portion, and an openable top lid and openable bottom lid.

This type of composting container is typically used outdoors and is left for about two months until the waste is fully decomposed. Meanwhile, the waste sinks from above, swelling at the middle height of or at the bottom of the container, and is compactly pressed and hardened. The compost partly becomes a so-called bridge. When the bottom lid is opened, the clumped state is not released, and taking out the compost is occasionally difficult.

Japanese Open Patent Gazette No. 9-278573, assigned to the assignee of the present invention, discloses a composting container which has a shrinkable lower half barrel thereof, and is slackened when the compost is discharged. To discharge the compost from the discharge port of the container, the bridges need to be fragmented as necessary. A user thus needs to push the bridge using a bar or to destroy the bridge using a mallet. This is laborious to the user.

Accordingly, it is an object of the present invention to provide a composting container that allows a compost to be easily discharged even when a bridge develops in the compost. To achieve the above object, a composting container of the present invention includes a tubular barrel portion fabricated of an air permeable material, and an openable top lid and an openable bottom lid respectively arranged at the top and bottom thereof, wherein the tubular barrel portion on the lower half thereof has at least one longitudinally openable port. With the lower half of the barrel portion of the container is longitudinally opened, the size of the opening for discharging a compost is enlarged, and resulting bridges are taken out without difficulty.

The composting container further includes a laterally expandable, folded filler cloth arranged on the internal circumference of the tubular barrel portion at the longitudinally openable port. With this arrangement, small clumps of compost are prevented from being leaked laterally even when the barrel longitudinal port is opened.

The composting container preferably includes a discharge-port portion downward extending from the tubular barrel portion, and a petal-shape-folded bottom support member, which is arranged on the bottom edge of the discharge-port portion and closes the bottom of the discharge-port portion after closing the discharge-port portion, wherein the discharge-port portion and the bottom support member are cut along an extension line of the longitudinally openable port of the barrel portion. With this arrangement, together with a conventional discharge-port portion and a conventional petal-shape-folded bottom support member, these ports are longitudinally opened wide enough to discharge bridges of the compost.

The lower half of the tubular barrel portion preferably has a plurality of longitudinally openable ports.

### BRIEF DESCRIPTION OF THE DRAWINGS

FIG. 1 is a perspective view diagrammatically showing a composting container of the present invention
FIG. 2 is a perspective view of the composting container viewed from the side thereof
FIG. 3 is a partial cross-sectional view of the composting container.

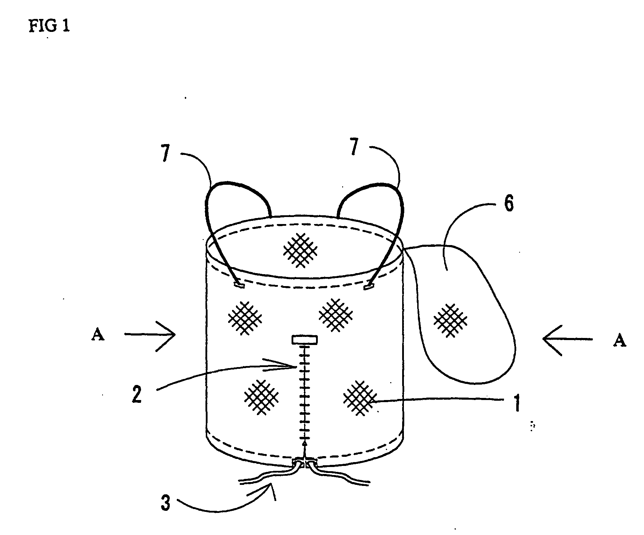

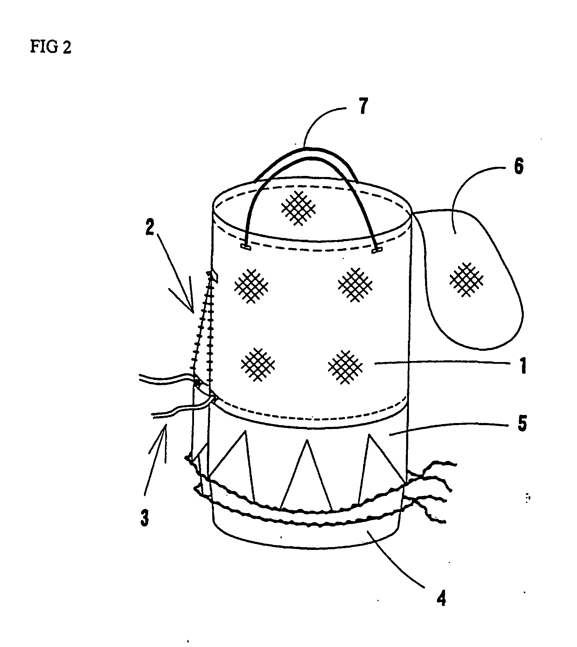

The preferred embodiments of the present invention are now discussed, referring to the drawings. FIG. 1 and FIG. 2 show one example of composting container of the present invention. FIG. 2 is a perspective view of the compositing container viewed from the side thereof. Referring to FIG. 1 and FIG. 2, there are shown a barrel portion 1, a zipper 2 for longitudinally opening the lower half of the barrel portion, a rope 3 running along the bottom edge of the container for reinforcing the zipper 2, a discharge-port portion 4 which is a lower extension of the barrel portion of the container, a petal-shape-folded bottom support member 5 for closing the bottom of the container after the discharge-port portion 4 is closed, a top lid 6, and handles 7. Referring to FIG. 2, the zipper 2, the discharge-port portion 4 and the petal-shape-folded bottom support member 5 are opened. The feature of the present invention is that the zipper 2 runs vertically in the lower half of the barrel portion 1 of the container to help the container open in a large opening on the lower half thereof. As the compost in the container is decomposed, the compost sinks, and is hardened, swelling the container at its lower half. Since the zipper 2 also opens the lower half of the barrel portion of the container together with the bottom lid thereof, the discharge opening is substantially enlarged. Bridges of the compost are taken out without the need for destroying them. The rope 3 is arranged to reinforce the zipper 2. By fastening the rope 3, the zipper 2 is prevented from being torn open by the sinking of the compost.

Another feature of the present invention is that the discharge-port portion 4 and the petal-shape-folded bottom support member 5 are cut opened in alignment with the extension line of the zipper 2. The discharge port opened in a longitudinal direction offers an exit opening larger than the conventional discharge port, thereby allowing the compost to be taken out with the bridges intact. When the container is empty, both longitudinal edges of the barrel portion have sufficient margins so that the edges overlap each other in a tubular form. Specifically, the discharge-port portion forms the tubular form with the cut edge portions thereof overlapping each other when the zipper 2 is closed. When the zipper 2 is opened; the discharge-port portion is also opened. With the edges of the discharge-port portion overlapping each other, small clumps of compost are not laterally leaked. Also, the bottom support member 5 has cut edge portions overlapping each other.

In the embodiment shown in FIG. 1 and FIG. 2, the discharge port is opened in one longitudinally extending port only on the barrel portion of the container. If relatively large bridges are formed, a plurality of longitudinal ports may be opened. Specifically, two to six longitudinal ports may be arranged. If the bottom of the barrel portion is circular, arcs around the circle and defined by the formation of a plurality of longitudinally extending zippers may be set to be equal in length. The use of the discharge-port portion or the bottom support member 5 is not a requirement. Instead, the simple top lid shown in FIG. 1 and FIG. 2 may be used as a bottom lid.

Besides the above-referenced zipper, any known technique may be used as means for longitudinally opening the barrel portion. The rope is intended to prevent the zipper from being torn open by the sunk compost in the course of decomposition of the compost. Any other technique may be employed instead as long as it serves this purpose. For example, a hook or a button may be used.

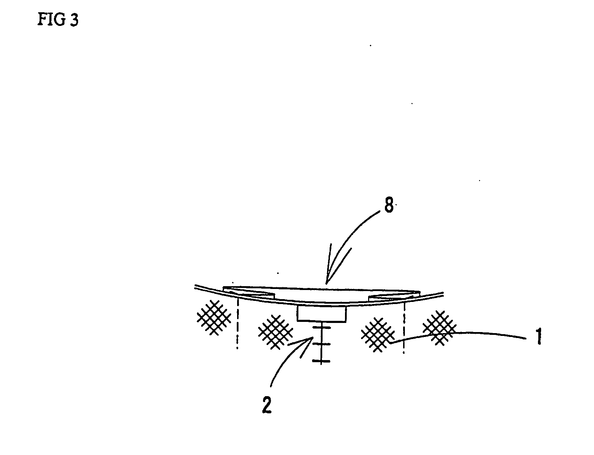

FIG. 3 is a cross-sectional view of the compost container taken along arrows A in FIG. 1. Designated 8 is a laterally expandable folded filler cloth arranged on the internal circumference of the barrel portion. With the folded filler cloth applied on the internal area of the zipper 2, no compost is laterally discharged even when the zipper 2 is opened. For its lateral expansion, the filler cloth expands as the zipper 2 is opened or closed. The size of the opening of the discharge port remains wide. The folded filler cloth may be a gathered cloth or any other laterally expandable cloth.

In accordance with the present invention, the lower half of the barrel portion of the composting container is opened at least in one longitudinally extending opening. The discharge port is thus widened to discharge the compost from the container. The bridges are thus taken out without the need for fragmentation.

The discharge-port portion 4 and the petal-shape-folded bottom support member 5 for opening and closing the bottom of the container are cut opened in alignment with the extension line of the opening of the barrel portion. This arrangement allows the opening of the container to be widened.

The use of the laterally expandable folded filler cloth arranged on the internal circumference of the barrel portion at the longitudinal opening permits the discharge port to be kept wide while preventing small clumps of compost from being laterally leaked.

## Claims

1. A composting container comprising a tubular barrel portion (1) fabricated of an air-permeable material, and an openable top lid (6) and an openable bottom lid (4) respectively arranged at the top and the bottom thereof, wherein the tubular barrel portion (1) on the lower half thereof has at least one longitudinally openable port (2), **characterized by** comprising a laterally expandable, folded filler cloth (8) arranged on the internal circumference of the tubular barrel portion (1) at the longitudinally openable port (2).

2. A composting container according to claim 1, comprising a discharge-port portion (4) downward extending from the tubular barrel portion (1) and a petal-shape-folded bottom support member (5), which is arranged on the bottom edge of the discharge-port portion (4) and closes the bottom of the discharge-port portion (4) after closing the discharge-port portion (4), wherein the discharge-port portion (4) and the bottom support member (5) are cut along an extension line of the longitudinally openable port (2) of the barrel portion (1).

3. A composting container according to any of claims 1 or 2, wherein the lower half of the tubular barrel portion (1) has a plurality of longitudinally openable ports (2).

## Patentansprüche

1. Kompostierungsbehälter mit einem rohrförmigen Trommelteil (1), der aus einem luftdurchlässigen Material hergestellt ist, und einem öffnungsbaren obersten Deckel (6) und einem öffnungsbaren untersten Deckel (4), die jeweils an seinem oberen Teil und an seinem unteren Teil angeordnet sind, wobei der rohrförmige Trommelteil (1) an seiner unteren Hälfte wenigstens ein in Längsrichtung öffnungsbares Tor (2) hat, **dadurch gekennzeichnet, dass** er ein in lateraler Richtung dehnbares, gefaltetes Füllgewebe (8) aufweist, das bei dem in Längsrichtung öffnungsbaren Tor (2) am inneren Umfang des rohrförmigen Trommelteils (1) angeordnet ist.

2. Kompostierungsbehälter nach Anspruch 1, der einen Entladetorteil (4) aufweist, der sich vom rohrförmigen Trommelteil (1) nach unten erstreckt, und ein blumenblattförmig gefaltetes Bodenstützelement (5), das am Bodenrand des Entladetorteils (4) angeordnet ist und den Boden des Entladetorteils (4) nach einem Schließen des Entladetorteils (4) verschließt, wobei der Entladetorteil (4) und das Bodenstützelement (5) entlang einer Ausdehnungslinie des in Längsrichtung öffnungsbaren Tors (2) des Trommelteils (1) geschnitten bzw. aufgetrennt sind.

3. Kompostierungsbehälter nach einem der Ansprüche 1 oder 2, wobei die untere Hälfte des rohrförmigen Trommelteils (1) eine Vielzahl von in Längsrichtung öffnungsbaren Toren (2) hat.

## Revendications

1. Récipient à compost comprenant une partie en forme de baril tubulaire (1) fabriqué dans un matériau perméable à l'air, et un couvercle supérieur ouvrable (6) et un couvercle inférieur ouvrable (4) placés respectivement en haut et en bas de la partie en forme de baril, où sur sa moitié inférieure la partie en forme de baril tubulaire (1) a au moins un orifice ouvrable longitudinalement (2), **caractérisé en ce qu'**il comprend un réservoir en toile (8) plié et latéralement expansible, placé sur la circonférence interne de la partie en forme de baril tubulaire (1) au niveau de l'orifice ouvrable longitudinalement (2).

2. Récipient à compost selon la revendication 1, comprenant une partie servant d'accès pour le déchargement (4) s'étendant vers le bas à partir de la partie en forme de baril tubulaire (1) et plié en forme de pétale un membre de soutien inférieur (5), qui est placé sur le bord inférieur de la partie servant d'accès pour le déchargement (4) et ferme le fond de la partie servant d'accès pour le déchargement (4) après fermeture de la partie servant d'accès pour le déchargement (4), où la partie servant d'accès pour le déchargement (4) et le membre de soutien inférieur (5) sont coupés suivant une ligne de prolongement de l'orifice ouvrable longitudinalement de la partie en forme de baril (1).

3. Récipient à compost selon l'une des revendications 1 ou 2, où la moitié inférieure de la partie en forme de baril tubulaire (1) a une pluralité d'orifices ouvrables longitudinalement
